# EUROPÄISCHE PATENTANMELDUNG

(11) **EP 0 610 900 A1**
(43) Veröffentlichungstag der Anmeldung: **17.08.1994**
(21) Anmeldenummer: 94101928.3
(22) Anmeldetag: 08.02.1994
(51) Int. Cl.: A01D 41/14, E01H 5/06, F15B 1/02

(54) **Hydraulische Entlastungsvorrichtung für ein Anbaugerät**

(30) Priorität: 11.02.1993 DE 4304133
(71) Anmelder: Martin Beilhack Maschinenfabrik und Hammerwerk GmbH, D-83022 Rosenheim (DE)
(72) Erfinder: Thanner, Werner, D-83527 Haag-Rosenberg (DE)
(74) Vertreter: Flach, Dieter Rolf Paul, Dipl.-Phys.

(57) **Zusammenfassung**

Eine hydraulische Entlastungsvorrichtung für ein Anbaugerät, insbesondere für einen an einem Trägerfahrzeug anbaubaren Schneepflug wirkt über einen Hydraulikzylinder (11), worüber ein Entlastungsdruck erzeugt wird, wobei der herrschende Druck-Istwert bei Abweichung von einem in der Entlastungsvorrichtung einstellbaren Druck-Sollwert auf den eingestellten Druck-Sollwert rückführbar ist.

Um eine verbesserte Entlastungsvorrichtung zu schaffen, bei der das umgewälzte Hydraulikmedium möglichst wenig erhitzt wird, sind die folgenden Maßnahmen vorgesehen:
- es ist ein über den kraftfahrzeugseitig vorgesehenen Hydraulikkreislauf unter Verwendung des Hydraulikmediums aufladbarer Druckspeicher (25) vorgesehen,
- es ist eine Umschaltventil-Anordnung (17) vorgesehen,
- im Entlastungsbetrieb ist bei Erreichen des Entlastungsdruck-Sollwertes im Druckspeicher (25) und/oder in dem der Entlastung dienenden Druckraum (13) des Hydraulikzylinders (11) die Umschaltventil-Anordnung (17) in eine Entlastungs-Schaltstellung (13) so umsteuerbar, daß der kraftfahrzeugseitige Hydraulikkreislauf von dem Entlastungs-Kreislauf getrennt und der Druckspeicher (25) mit dem für die Druckentlastung bestimmten Druckraum (13) des Hydraulikzylinders (11) verbunden ist.

## Beschreibung

Die Erfindung betrifft eine hydraulische Entlastungsvorrichtung für ein Anbaugerät, insbesondere für einen an einem Trägerfahrzeug anbaubaren Schneepflug nach dem Oberbegriff des Anspruches 1.

Eine gattungsbildende Entlastungseinrichtung ist aus der DE 36 28 427 C2 bekannt geworden. Mit dieser Entlastungsvorrichtung ist eine Druckentlastung zur Verringerung der Schürf- oder Auflagekräfte der Pflugschar möglich. Darüber können auch während des Räumvorganges ständig die tatsächlichen Auflagekräfte auf einen gewünschten einstellbaren Sollwert geregelt werden. Es handelt sich hierbei um einen aktiven und dynamischen Regelungsprozeß.

Die bekannte Entlastungsvorrichtung verwendet dabei einen Entlastungszylinder, der in der Regel aus dem Hubzylinder zum Heben und Senken der Pflugschar selbst besteht. Die Druckentlastungs-Steuerungseinrichtung umfaßt eine zwischen der Hochdruck- und der zum Tank führenden Rücklaufleitung vorgesehene Zweigleitung mit einem dort angeordneten Regelventil, welches in Abhängigkeit der Differenz zwischen dem Druck-Sollwert und dem Druck-Istwert im Entlastungszylinder entsprechend öffnet und schließt und darüber unter gleichzeitiger Druckabsenkung oder Druckerhöhung eine Verbindung zwischen der Hochdruckleitung und der Rückleitung herstellt.

Da also über die auf dem Fahrzeug vorgesehene Hydraulikpumpe das Hydraulikmedium stets voll gegen das Regelventil fördert, werden zum Teil beachtliche Öllaufmengen umgewälzt, die zu einer entsprechenden Erwärmung führen. Dies bedingt natürlich zum einen einen Energieverlust und erhöht zum anderen den Treibstoffverbrauch.

Dabei ist vor allem zu bedenken, daß die umgewälzte Hydraulikmenge letztendlich durch die auf dem Nutzfahrzeug von Hause aus installierte Hydraulikpumpe festgelegt ist. Da es sich hierbei in der Regel um Zahnradpumpen und gegebenenfalls auch Hydrostatpumpen mit hohem Fördervolumen handelt, ergibt sich von daher der Nachteil, daß eine entsprechend große Hydraulikmenge umgewälzt und erhitzt wird.

Aus der DE 33 37 789 A1 ist eine hydraulische Schwebeanordnung für ein landwirtschaftliches Gerät mit einem sog. Gas-Öl-Sammler bekannt geworden, der mit dem Druckraum zumindest eines Hydraulikzylinders in Verbindung steht. Das landwirtschaftliche Anbaugerät wird getragen durch den Hydraulikzylinder, d.h. gehoben und abgesenkt. Bei landwirtschaftlichen Geräten besteht insbesondere der Wunsch, daß das Anbaugerät, das sich beispielsweise in zwar abgesenkter, aber noch über dem Boden befindlicher angehobener Position durch entsprechende Druckbeaufschlagung der Hydraulikzylinder befindet, beim unerwünschten Aufsetzen am Boden nicht mit dem vollen Gewicht auf dem Boden aufsetzt, sondern entsprechend entlastet ist, so daß eine leichtere Nachführung oder Anhebung des Anbaugerätes möglich ist.

Entsprechend dieser vorveröffentlichten Druckschrift ist dazu ein Druckspeicher vorgesehen. Dieser Druckspeicher ist durch Zwischenschaltung eines Rückschlagventils unter normalen Einsatzbedingungen grundsätzlich geschlossen. Das Rückschlagventil öffnet erst beim Aufsetzen des Anbaugerätes am Boden, wodurch der in den Druckkammern des zumindest einen Hydraulikzylinders herrschende Tragdruck eine gewisse Entlastung erfährt. Senkt sich der Druck in dem Hydraulikzylinder durch Aufsetzen des Anbaugerätes am Boden unter den im Druckspeicher herrschenden Druck, so öffnet das Rückschlagventil und es findet die gewünschte Entlastung statt.

Diese vorbekannte Entlastungsvorrichtung weist aber Nachteile beim praktischen Betrieb auf. Insbesondere ist es nicht vorgesehen oder nicht ohne weiteres möglich, eine schnelle Nachführung der Entlastung jeweils auf einen bestimmten gewünschten Entlastungs-Solldruck zu gewährleisten. Eine unterschiedliche Einstellung des Entlastungsdruckes ist zum einen nur manuell und zum anderen nur unter Einhaltung ganz bestimmter Maßnahmen und Einzelschritte möglich und durchführbar.

Aufgabe der vorliegenden Erfindung ist es von daher, eine verbesserte hydraulische Entlastungsvorrichtung zu schaffen, die auch während des Einsatzes und Betriebes eines Anbaugerätes jederzeit zu- oder wieder abgeschaltet werden kann, und die darüber hinaus vor allem auch während des Betriebes eine Möglichkeit bietet, daß ein vorbestimmter Entlastungs-Solldruck zumindest im wesentlichen eingehalten wird.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Im Gegensatz auch zu der aus der DE 33 37 789 A1 bekannten Entlastungsvorrichtung eröffnet erst die erfindungsgemäße Vorrichtung die Möglichkeit, daß beispielsweise bei Anwendung und Einsatz eines Schneepfluges an einem Straßenräumfahrzeug auch während des Räumvorganges ein eingestellter Entlastungs-Solldruckwert weitgehend aufrecht erhalten und selbst bei Abweichung der Istwert stets wieder auf den Sollwert rückführbar ist.

Erfindungsgemäß erfolgt die Umschaltung zwischen den einzelnen Schaltzuständen zur Rückführung bzw. Aufrechterhaltung des Druck-Istwertes unter Bezugnahme auf den vorgegebenen Druck-Sollwert mittels einer Umschaltventileinrichtung. Fällt der Druck im Druckspeicher zu stark oder treten zu hohe Druckspitzen auf, so kann durch automatische Umschaltung des Umschaltventils eine entsprechende Nachführung und Anpassung des Druck-Istwertes in Richtung auf den Druck-Sollwert erfolgen.

Um im praktischen Betrieb auch den gesamten Energieverbrauch möglichst gering zu halten, ist ferner vorgesehen, daß die gesamte Umschaltung zwischen den verschiedenen Umschaltstellungen (zur Durchführung des normalen Entlastungsbetriebes; zur Druckerhöhung im Druckentlastungskreislauf nach zu starkem Abfall des Druckes bzw. zur Druckabsenkung im Druckentlastungskreislauf, wenn ein zu hoher Entlastungsdruck aufgetreten ist) nach Art einer Hysterese-Schaltung erfolgt.

Diese erfindungsgemäße Lösung bietet zudem einen weiteren wesentlichen Vorteil. Durch die Hysterese-Schaltung kann nämlich verhindert werden, daß ein unerwünschtes _{"}Aufschaukeln", d.h. ein unerwünschtes ständiges Hin- und Herschalten der Entlastungsvorrichtung vermieden wird. Denn im Einsatz treten natürlich stets zumindest geringfügige Druckschwankungen auf, die aber für den Einsatz der Entlastungsvorrichtung ohne nachteilige Folgen und Konsequenzen sind, wobei nicht jede bereits geringfügige Schwankung oder Änderung die an sich beschriebene Nachführung des Druck-Istwertes auf den Druck-Sollwert zur Folge haben soll. Die erwähnte Hysterese-Schaltung kann ein derartiges unerwünschtes Aufschaukeln und permanentes Hin- und Herschalten sicher vermeiden.

Beim Einsatz der vorliegenden Erfindung wird insbesondere auch im Fall der Entlastung eines Schneepfluges eine unerwünschte zu hohe Aufwärmung und Überwärmung des Hydraulikmediums vermieden. Zudem wird im Einsatz bei aufgeladenem Druckspeicher zunächst einmal bei der dadurch bewirkten Druckentlastung kein weiterer Energieverbrauch verursacht. Vor allem aber erweist sich als überraschend, daß mit der erfindungsgemäßen Entlastungsvorrichtung beispielsweise im Falle eines zu entlastenden Schneepfluges ein sehr viel schnelleres und problemloses Nachfahren von Bodenunebenheiten und Bodenwellen möglich ist, als beim gattungsbildenden Stand der Technik. Während nämlich beim Stand der Technik eine gewisse Trägheit der Entlastungsvorrichtung festzustellen ist, mit der Folge, daß beim Überfahren von Bodenwellen und Bodenunebenheiten der zu entlastende Schneepflug diesen welligen Bodenverhältnissen nicht entsprechend schnell folgen kann, stellt dies erfindungsgemäß kein Problem mehr dar.

Bevorzugt wird bei dem erfindungsgemäßen Entlastungssystem ein Drucksensor oder Druckaufnehmer verwandt, der den jeweiligen Druck im Druckspeicher bzw. im angeschlossenen Hydraulikzylinder des Verbrauchers mißt. Elektrisch/elektronisch kann darüber auch ein unterschiedlicher Entlastungsdruck eingestellt werden.

In einer besonders bevorzugten Ausführungsform kann über den Drucksensor ein beliebiger oder in gewissen diskreten Schritten vorwählbarer Entlastungsdruck eingestellt werden, beispielsweise 20 %, 40 %, 60 %, 80 % oder 100 % des maximal möglichen Entlastungsdruckes, um hier eine Feinanpassung an die Gegebenheiten und Erfordernisse vornehmen zu können.

Nachfolgend wird die Erfindung anhand eines Ausführungsbeispieles näher erläutert.

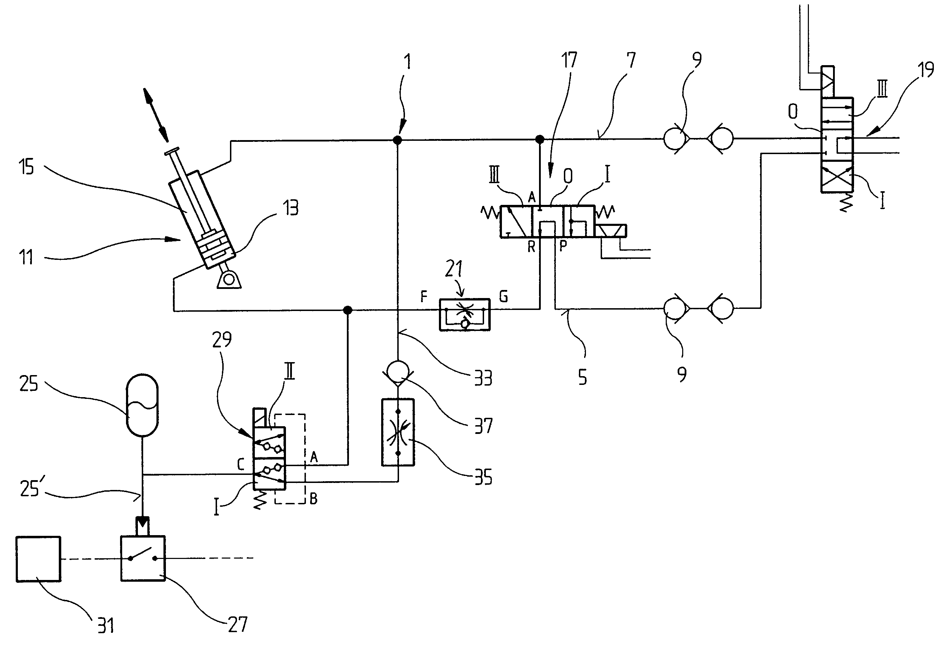

In der Zeichnung ist die Entlastungsvorrichtung 1 gezeigt. Die Entlastungsvorrichtung, d.h. zwei Leitungen 5 und 7, sind über Anschlüsse 9 an einem auf einem Kraftfahrzeug vorgesehenen Hydraulikkreislauf anschließbar, der - was in der Zeichnung nicht näher dargestellt ist - beispielsweise zumindest eine Hydraulikpumpe umfaßt, welche von einer auf dem Kraftfahrzeug betriebenen Verbrennungskraftmaschine antreibbar ist.

Die beiden Leitungen 5 und 7 sind letztlich mit einem angeschlossenen Verbraucher 11 verbunden, im gezeigten Ausführungsbeispiel mit einem Hydraulikzylinder 11, wo - rüber beispielsweise ein frontseitig am Kraftfahrzeug anbaubarer Schneepflug in Hebestellung angehoben bzw. abgesenkt werden kann. Der Hydraulikzylinder umfaßt dabei einen ersten Druckraum 13, der beim Anheben druckbelastet und bei Zuschaltung der Entlastungsvorrichtung 1 mit einem Entlastungsdruck druckbeaufschlagt ist, und einen weiteren Druckraum 15.

Die Entlastungsvorrichtung selbst ist mit einem ersten Dreistellungs-Zweiwege-Umsteuerventil 17 ausgestattet, welches elektrisch ansteuerbar ist.

In der gezeigten O-Stellung ist die üblicherweise die Druckleitung darstellende Leitung 5 mit dem Druckraum 13 des Hydraulikzylinders 11 verbunden, wohingegen der drucklos geschaltete Druckraum 15 des Hydraulikzylinders 11 mit der zweiten, hier die drucklose Rücklaufleitung darstellenden Leitung 7 verbunden ist.

Über ein kraftfahrzeugseitig vorgesehenes Umsteuerventil, im gezeigten Ausführungsbeipsiel ebenfalls ein Dreistellungs-Zweiwege-Ventil 19, ist der kraftfahrzeugseitig vorgesehene Hydraulikkreis von der Entlastungsvorrichtung 1 und damit auch von dem Verbraucher abkoppelbar.

In dieser gezeigten Stellung kann beispielsweise der Schneepflug in angehobener Stellung gehalten oder aber durch entsprechende Umschaltung des kraftfahrzeugseitig vorgesehenen elektromagnetisch ansteuerbaren Umsteuerventils 19 in abgesenkte Stellung herabgesenkt und in üblicher Weise betrieben werden, d.h. ohne jede Entlastungsvorrichtung.

In angehobener Stellung des Schneepfluges, also bei nach oben hin ausgefahrenem Kolben des Hydraulikzylinders 11 befindet sich das kraftfahrzeugseitig vorgesehene Umsteuerventil 19 in seiner gesperrten mittleren O-Stellung. Zum Absenken des Schneepfluges wird das kraftfahrzeugseitige Umsteuerventil 19 in seine Schaltstellung I geschaltet, wodurch der sonst druckbelastete Druckraum 13 mit einer kraftfahrzeugseitig vorgesehenen Rücklaufleitung zum Tank verbunden wird. Für diesen Fall kann zusätzlich eine Drossel in der zum Druckraum 13 führenden Leitung vorgesehen sein, um kein abruptes Absenken bzw. Abfallen der Pflugschar zu ermöglichen, sondern um ein einen gewissen Zeitraum benötigendes automatisches langsames Absenken zu bewirken. Dies dient der Sicherheit.

Zum Anheben des Schneepflugs wird dann wieder das kraftfahrzeugseitige Umsteuerventil 19 in seine Schaltstellung III so umgeschaltet, daß der untere Druckraum 13 des Hydraulikzylinders 11 wieder druckbeaufschlagt und durch entsprechendes Verstellen des Hydraulikzylinders beispielsweise der darüber betätigbare frontseitige Schneepflug angehoben werden kann.

Dies alles erfolgt bei in der Zeichnung unverändert geschaltetem Umsteuerventil 17 der Entlastungsvorrichtung 1.

Um einen Entlastungsbetrieb zu ermöglichen, ist schließlich noch der in der Zeichnung dargestellte Druckspeicher 25 vorgesehen, welchem ein Drucksensor 27 zugeordnet ist. Die Anschlußleitung 25' zum Druckspeicher 25 führt im gezeigten Ausführungsbeispiel zu einem elektrisch betätigbaren Zweistellungs-Zweiwege-Umsteuerventil 29. Die gezeigte Stellung des Umsteuerventils 29 betrifft die bei abgeschaltetem Entlastungsbetrieb übliche Schaltstellung, bei welcher die üblicherweise unter Druck stehende Leitung 5 vom Druckspeicher 25 getrennt ist und der Druckspeicher 25 mit der zum Rücklauf führenden, in der Regel druckentlasteten Leitung 7 in Verbindung steht.

Nachfolgend wird auf die Funktionsweise und den Betrieb der Entlastungsvorrichtung eingegangen.

Soll beispielsweise bei abgesenktem Schneepflug der Entlastungsbetrieb zugeschaltet werden, so wird das Umsteuerventil 29 zur Aktivierung des Entlastungsbetriebes ebenfalls von der in der Figur gezeigten Außerbetriebstellung I in die Inbetriebstellung II umgeschaltet. In dieser Schaltstellung wirkt die Leitung 5 (bei entsprechender Umschaltung des kraftfahrzeugseitigen Umsteuerventils 19 in die Schaltstellung III) als Druckleitung, in der das von der kraftfahrzeugseitig installierten Hydraulikpumpe bereitgestellte Druckmedium zur Verfügung gestellt wird. An sich würde darüber der Druckraum 13 des Hydraulikzylinders 11 zur Anhebung des angebauten Schneepfluges druckbelastet werden. Da allerdings der Druckspeicher 25 drucklos ist, baut sich zunächst der Druck im Druckspeicher 25 bis zu einem in einer Elektronik 31 einstellbaren Wert auf. Sobald der Drucksensor 27 das Erreichen des voreingestellten gewünschten Druckwertes meldet, wird hierüber nunmehr das Umsteuerventil 17 in seine dritte Schaltposition III umgeschaltet, in der die beiden Druckleitungen 5 und 7 in Umlauf geschaltet und der mit dem Hydraulikzylinder in Verbindung stehende Teil der Entlastungsvorrichtung vom kraftfahrzeugseitigen Hydraulikkreis abgekoppelt ist. Diese Schaltstellung III entspricht dem sogenannten Entlastungsbetrieb des Umsteuerventiles 17.

In dieser Schaltstellung wirkt also der in dem Druckraum über den Drucksensor eingestellte Druck kontinuierlich im Druckraum 13 und bewirkt darüber die gewünschte Druckentlastung.

Bei Überfahren von Bodenunebenheiten kann dabei der Schneepflug diesen Bodenwellen auch mit kurzem Abstand schnell folgen, so daß darüber ein optimales Räumergebnis erzielt wird. Sollte beim Auflaufen des Schneepfluges auf eine ansteigende Bodenwelle der Druck im Druckraum 13 über den über den Drucksensor 27 eingestellten Druckwert ansteigen, so würde über die Elektronik 31 dann kurzzeitig das Umsteuerventil 17 in seine erste Überlastschaltungs-Stellung I zurückschalten, wodurch der Druckspeicher und der mit dem Druckentlastungsdruck beaufschlagte Druckraum kurzzeitig mit der Rücklaufleitung verbunden sind. Sobald der Druck wieder auf den über den Drucksensor 27 in der Elektronik 31 voreingestellten Wert abgefallen ist, schaltet das Umsteuerventil 17 wieder in seine Schaltposition III, d.h. in die Entlastungsbetriebs-Stellung um, in der der Druckspeicher wieder vom Hydraulikkreis des Kraftfahrzeuges getrennt und der voreingestellte Entlastungsdruck wieder wirksam ist.

Sollte allerdings der Druck nach zuvor auftretendem Überdruck und Umschaltung des Umsteuerventiles 17 in seine Überlastschaltunges-Stellung I unter den voreingestellten Druckwert im Druckspeicher abfallen, so schaltet das Umsteuerventil 17 nicht gleich in seine Schaltposition III (für den Entlastungsbetrieb), sondern zunächst in seine mittlere Schaltstellung O. Dies führt, wie eingangs beschrieben wurde, ebenfalls nicht zu einem Anheben des Hydraulikzylinders 11, sondern zunächst zu einem Druckanstieg im Druckspeicher 25. Wenn über den Drucksensor 27 wieder das Erreichen des voreingestellten Druckes gemeldet wird, wird dann das Umsteuerventil 17 von seiner mittleren Schaltstellung "O" in die bereits erwähnte dritte Schaltposition III weiter umgeschaltet, um den Entlastungsbetrieb wieder voll wirksam durchzuführen und aufrechtzuerhalten.

Sollte ganz allgemein im Entlastungsbetrieb der Entlastungsdruck-Istwert unter den Entlastungsdruck-Sollwert fallen, so ist über die Umschaltventil-Anordnung 17 die unter Druck stehende Druckleitung des fahrzeugseitigen Hydraulikkreislaufs mit der Entlastungsvorrichtung, d.h. dem Druckspeicher 25 zur Druckanhebung des Entlastungsdruckes zumindest kurzzeitig verbindbar.

Sollte der Druckentlastungsbetrieb abgeschaltet werden, dann wird das Umsteuerventil 29 wieder in seine Schaltposition I umgeschaltet, worüber der Druckspeicher 25 nunmehr von dem Druckraum 13, d.h. also vom Verbraucher abgekoppelt ist und worüber eine Verbindung über die Leitung 33 zur Rücklaufleitung 7 hergestellt ist.

Nur aus Sicherheitsgründen, um einen zu schnellen und plötzlichen Druckabfall im Druckspeicher bei Umschaltung in Nicht-Betrieb der Entlastungseinrichtung zu vermeiden, ist in dieser Druckleitung 33 noch ein einstellbares Drosselventil 35 geschaltet, welches in Reihe geschaltet ist mit einem in Richtung des Druckspeichers 25 wirkenden Rückschlagventils 37.

Sobald das auf dem Kraftfahrzeug installierte Umschaltventil 19 wieder auf Heben umgeschaltet wird, wird darüber ebenfalls automatisch das für den Entlastungsbetrieb benötigte Umschaltventil auch wieder in die erwähnte Schaltstellung III (sofern nicht bereits geschehen) umgeschaltet, so daß dann über die mittlere O-Stellung des Umschaltventils 17 der Verbraucher, d.h. der Schneepflug, in angehobene Stellung verschwenkt werden kann.

Es wird grundsätzlich noch angemerkt, daß eine Zu- bzw. Abschaltung des Entlastungsbetriebes auch bei noch angehobenem Schneepflug möglich ist.

Aus dem geschilderten Sachverhalt wird klar, daß die Heben- und Senken-Einstellung des Hydraulikzylinders 11 von dem kraftfahrzeugseitig installierten Umsteuerventil 19 vorgenommen wird. Sobald der Entlastungsbetrieb zugeschaltet wird, wird das fahrzeugseitige Umsteuerventil 19 an sich in seine Schaltstellung III für "Heben" geschaltet, wobei für den Entlastungsbetrieb gleichzeitig das dem Druckspeicher zugeordnete Umschaltventil 29 in "Druck-Auflade-Schaltstellung" umgeschaltet wird. Sobald der voreingestellte Druck über den Drucksensor 27 gemessen wird, wird dann das Umschalt-Ventil 17 von seiner mittleren Schaltstellung in die Entlastungsposition III umgeschaltet.

In der Regel von der Fahrerkabine des Kraftfahrzeuges aus kann über die Elektronik 31 beispielsweise ein Entlastungsdruck so eingestellt werden, daß er nicht den maximal möglichen Entlastungsdruck von 100 %, sondern beispielsweise von 20 %, 40 %, 60 % oder 80 % erreicht wird. Möglich ist auch eine kontinuierliche Einstellung. Jeweils nach Erreichen des gewünschten Entlastungsdruckes erfolgt dann die Umsteuerung des Umschaltventils 17.

Anstelle der erwähnten Dreistellungs-Zweiwegeventile oder der Zweistellungs-Zweiwegeventile können auch grundsätzlich andere Ventilanordnungen verwandt werden, um einen funktionsgleichen Schaltungsablauf zu gewährleisten.

Das Ausführungsbeispiel ist unter Verwendung eines Drucksensors beschrieben worden. Möglich wäre aber auch, daß beispielsweise kein Drucksensor verwandt wird, sondern beispielsweise die zum Druckspeicher führende Leitung über eine Bypassleitung zu einem entsprechenden Umschaltventil geführt ist. Nach Erreichen eines beispielsweise an einer Gegenfeder einstellbaren Druckwertes schaltet dann beispielsweise das in der Figur gezeigte Umschaltventil 17 in Entlastungsbetrieb um.

Um ein zu häufiges Hin- und Herschalten zwischen Entlastungsbetrieb, Überlast-Schaltung und Speiseschaltung zur Wiederherstellung des gewünschten Entlastungsdruckes im Druckspeicher 25 zu vermeiden, erfolgt der gesamte Schaltbetrieb unter Einhaltung einer gewissen Hysterese. Mit anderen Worten wird jeweils erst nach Abweichung eines bestimmten Mindestwertes vom Sollwert eine entsprechende Umschaltung vorgenommen.

Im gezeigten Ausführungsbeispiel ist - wie erwähnt - die Drossel 21 nur im Falle eines Absinkens der Pflugschar wirksam, da die Umgehungsleitung zur Umgehung der Drossel in diesem Falle über ein Rückschlagventil geschlossen ist. Demgegenüber kann ein Anheben schnell erfolgen, da hier das in der die Drossel umgehenden Leitung sitzende Rückschlagventil geöffnet ist.

Schließlich kann abweichend vom gezeigten Ausführungsbeispiel die Rücklaufleitung 7 unter Umgehung des fahrzeugseitigen Umschaltventiles 19 direkt zu einem im Fahrzuge vorgesehenen Tank geführt sein.

## Patentansprüche

1. Hydraulische Entlastungsvorrichtung für ein Anbaugerät, insbesondere für einen an einem Trägerfahrzeug anbaubaren Schneepflug, über welche ein Entlastungsdruck zur Verringerung der Schürf- oder Auflagekräfte des Anbaugerätes durch Ansteuerung eines Hydraulikzylinders (11) aufbringbar ist, in dem der in dem Hydraulikzylinder (11) herrschende Druck-Istwert bei Abweichung von einem in der Entlastungsvorrichtung einstellbaren Druck-Sollwert auf den eingestellten Druck-Sollwert regelbar ist, wobei die Entlastungsvorrichtung an einem fahrzeugseitig vorgesehenen Hydraulikkreislauf mit einer über die auf dem Kraftfahrzeug installierten Brennkraftmaschine antreibbaren Hydraulikpumpe anschließbar ist, **gekennzeichnet durch** die folgenden Merkmale
- es ist ein über den kraftfahrzeugseitig vorgesehenen Hydraulikkreislauf unter Verwendung des Hydraulikmediums aufladbarer Druckspeicher (25) vorgesehen,
- es ist eine Umschaltventil-Anordnung (17) vorgesehen,
- im Entlastungsbetrieb ist ausgehend von einem Druck unterhalb des Entlastungsdruck-Sollwertes bei Erreichen des Entlastungsdruck-Sollwertes im Druckspeicher (25) und/oder in dem der Entlastung dienenden Druckraum (13) des Hydraulikzylinders (11) die Umschaltventil-Anordnung (17) in eine Entlastungs-Schaltstellung (III) automatisch so umsteuerbar, daß der kraftfahrzeugseitige Hydraulikkreislauf von dem Entlastungs-Kreislauf getrennt und der Druckspeicher (25) mit dem für die Druckentlastung bestimmten Druckraum (13) des Hydraulikzylinders (11) verbunden ist,
- bei Anstieg des Entlastungsdruck-Istwertes über den Entlastungsdruck-Sollwert hinaus ist über eine Umschaltventil-Anordnung (17) eine Umschaltung in eine Überlast-Schaltstellung (I) zumindest kurzfristig derart vornehmbar, daß der zur Entlastung dienende Druckraum (13) des Hydraulikzylinders (11) und/oder Druckspeichers (25) mit einer Rücklaufleitung (7) automatisch verbindbar ist,
- bei Unterschreitung des Entlastungsdruck-Istwertes unter den Entlastungsdruck-Sollwert ist über eine Umschaltventil-Anordnung (17) zumindest kurzzeitig die unter Druck stehende Druckleitung des fahrzeugseitigen Hydraulikkreislaufes mit der Entlastungsvorrichtung, d.h. dem Druckspeicher (25), zur Druckanhebung des Entlastungsdruckes automatisch verbindbar, und
- die jeweilige Umschaltung der Umschaltventil-Anordnung (17) zwischen der Entlastungsschaltung (III) unter Aufrechterhaltung des Entlastungsbetriebes und der Überlastschaltung (I) unter Druckabsenkung bzw. der Druckspeicher-Auffüllschaltung (0) unter Druckerhöhung nach Art einer Hysterese erfolgt.

2. Entlastungsvorrichtung nach Anspruch 1, **dadurch gekennzeichnet**, daß dem Druckspeicher (25), dem der Druckentlastung dienenden Druckraum (13) des Hydraulikzylinders (11) und/oder einer der zugehörigen Verbindungsleitungen ein Drucksensor (27) zugeordnet ist, worüber in diskreten Schritten oder kontinuierlich ein Entlastungsdruck, vorzugsweise ein gegenüber dem im Hydraulikkreislauf auf dem Kraftfahrzeug herrschender Systemdruck relativ niedriger Entlastungsdruck einstellbar ist.

3. Entlastungsvorrichtung nach Anspruch 1 oder 2, **dadurch gekennzeichnet**, daß dem Druckspeicher (25) ein Umschaltventil (29) zugeordnet ist, welches im Entlastungsbetrieb stets eine Verbindung zwischen dem Druckspeicher (25) und dem der Entlastung dienenden Druckraum (13) des Hydraulikzylinders (11) herstellt, und welches bei abgeschaltetem Entlastungsbetrieb den Druckspeicher (25) mit einer drucklosen Rücklaufleitung (7) über eine Leitung (33) verbindet.

4. Entlastungsvorrichtung nach Anspruch 3, **dadurch gekennzeichnet**, daß der Drucksensor (27) an den Leitungsabschnitt (25') zwischen dem Umschaltventil (29) und dem Druckspeicher (25) vorgesehen oder im Druckspeicher (25) integriert ist.

5. Entlastungsvorrichtung nach Anspruch 4, **dadurch gekennzeichnet**, daß in der eine Verbindung vom Druckspeicher (25) zu einer drucklosen Rücklaufleitung (7) führenden Leitung (33) ein Drosselventil (35) geschaltet ist.

6. Entlastungsvorrichtung nach Anspruch 5, **dadurch gekennzeichnet**, daß mit dem Drosselventil (35) in Reihe ein Rückschlagventil (11) geschaltet ist, welches in Richtung zum Druckspeicher (25) sperrt.
